Europäisches Patentamt

European Patent Office

Office européen des brevets

(19)

(11) Numéro de publication: **0 323 372**
**A1**

(12) **DEMANDE DE BREVET EUROPEEN**

(21) Numéro de dépôt: **88420433.0**

(22) Date de dépôt: **23.12.88**

(51) Int. Cl.⁴: **F 16 B 7/04**
A 63 H 33/10, E 04 B 1/58
// F16C11/10

(30) Priorité: **28.12.87 FR 8718505**

(43) Date de publication de la demande:
**05.07.89  Bulletin  89/27**

(84) Etats contractants désignés:
**AT BE CH DE ES FR GB GR IT LI LU NL SE**

(71) Demandeur: **Souchko, Alexandre**
**16, rue Danièle Cazanova**
**F-42300 Roanne  (FR)**

(72) Inventeur: **Souchko, Alexandre**
**16, rue Danièle Cazanova**
**F-42300 Roanne  (FR)**

(74) Mandataire: **Karmin, Roger et al**
**Cabinet MONNIER 150, cours Lafayette**
**F-69003 Lyon  (FR)**

(54) **Dispositif d'assemblage d'éléments, notamment de profilés tubulaires.**

(57) Dispositif d'assemblage comprenant :
- un premier collier (1) coopérant avec un premier élément (2) ;
- un composant intermédiaire (3) comprenant une semelle (31) coopérant avec le premier collier (1) et un organe d'assemblage (35) ;
- un second collier (4) associé d'une part à l'organe d'assemblage (34, 35) du composant intermédiaire (3) et d'autre part à un second élément (5) ;
- et des moyens (6, 7) propres à solidariser la semelle (31) et le premier collier (1) d'une part et l'organe (35) par rapport au second collier (4) d'autre part.

Fig. 1

EP 0 323 372 A1

## Description

La présente invention se réfère au domaine de l'assemblage d'éléments, notamment de profilés tubulaires.

On sait qu'il existe des dispositifs d'assemblage pour les tubes des échafaudages ou analogues et qui permettent d'orienter lesdits tubes dans des directions multiples à partir de noeuds d'assemblage. Toutefois, les dispositifs d'assemblage en question ne sont prévus que pour le montage d'éléments tubulaires, de telle sorte qu'ils ne permettent pas la fixation d'autres accessoires. De plus, ils sont inesthétiques et ils comportent des vis ou écrous qui sont apparents et forment des obstacles inacceptables pour des applications autres que celles indiquées ci-dessus.

On a décrit dans le document EP-A-O 092 668 un dispositif pour assembler deux éléments tubulaires comportant deux colliers en deux pièces réunis par un organe intermédiaire, de telle manière que les deux éléments tubulaires puissent être orientés de différentes manières. Un tel dispositif est complexe de telle sorte que le coût est élevé, ce qui limite très nettement ses possibilités d'utilisation. En outre, il comporte un nombre élevé de composants, ce qui entraîne une fabrication onéreuse.

On connaît par ailleurs des systèmes d'assemblage dont l'un des colliers affecte la forme d'un U tel que celui décrit dans le document AU-A-25596. Un tel collier ne permet pas de changer l'orientation des deux éléments tubulaires assemblés, de sorte qu'il ne répond pas à tous les besoins de la pratique.

Les perfectionnements qui font l'objet de la présente invention visent à remédier aux inconvénients des dispositifs d'assemblage connus et à permettre la réalisation de tels dispositifs qui répondent mieux que jusqu'à présent aux desiderata des constructeurs d'ensembles tubulaires, notamment utilisés pour la décoration d'espaces divers.

Le but de l'invention est obtenu au moyen d'un dispositif d'assemblage du genre comprenant :
- un premier collier coopérant avec un premier élément ;
- un second collier associé à un second élément ;
- et un composant intermédiaire unissant les deux colliers ;

Ledit dispositif étant caractérisé en ce que les parois internes du premier collier qui affecte à la manière connue la forme d'un U, sont chacune creusées d'une rainure longitudinale à contre dépouille dans laquelle s'engage une semelle du composant intermédiaire tandis que des moyens sont associés audit composant pour coopérer avec le second collier affectant la forme d'un U.

Le dessin annexé, donné à titre d'exemple, permettra de mieux comprendre l'invention, les caractéristiques qu'elle présente et les avantages qu'elle est susceptible de procurer :

Fig. 1 est une vue éclatée d'un dispositif d'assemblage suivant l'invention destiné à l'assemblage de deux éléments tubulaires.

Fig. 2 est une vue du dispositif suivant l'invention à l'état monté et propre à assembler deux éléments tubulaires orthogonaux.

Fig. 3 est une vue par côté du dispositif suivant l'invention avec arrachements.

Fig. 4 est une vue semblable à celle de fig. 3, mais montrant le dispositif suivant l'invention en cours de montage.

Fig. 5 est une coupe suivant V-V (fig. 4).

Fig. 6 et 7 illustrent en perspective des variantes de réalisation du composant intermédiaire du dispositif d'assemblage suivant l'invention.

Fig. 8 est une vue semblable à celle de fig. 1, mais illustrant une autre variante de réalisation.

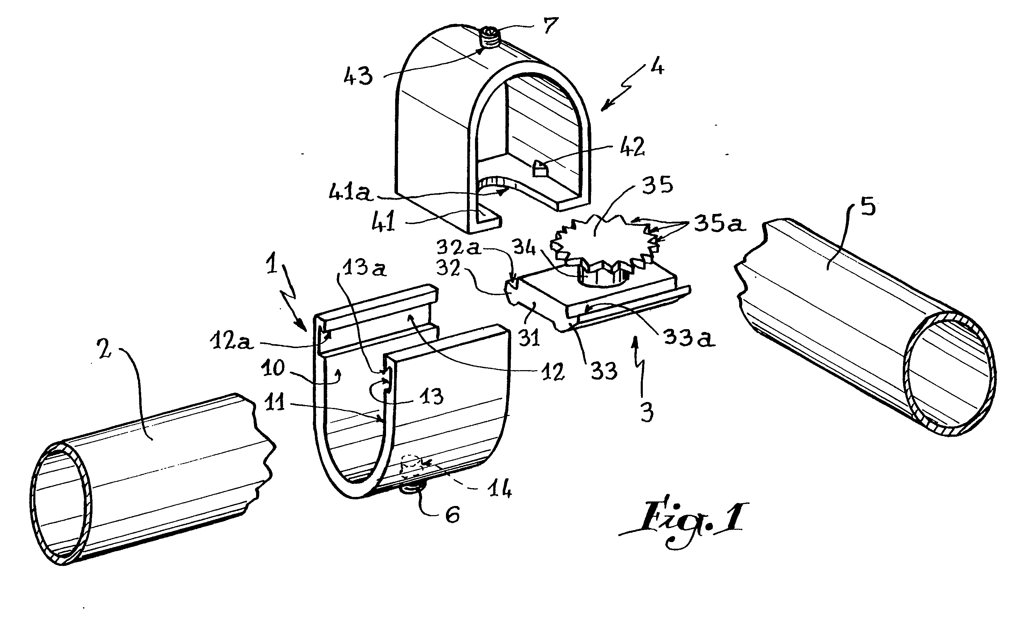

Le dispositif conforme à l'invention, illustré en fig. 1, comprend essentiellement un premier collier 1 susceptible de coopérer avec un premier élément 2, prévu tubulaire dans l'exemple représenté, un composant intermédiaire 3, un second collier 4 et un deuxième élément 5 destiné à être assemblé avec le premier élément 2 et qui se trouve, dans ce cas, être réalisé sous forme tubulaire. Le composant intermédiaire est assujetti comme on le décrira mieux plus loin, d'une part au premier collier et d'autre part au second.

Le premier collier 1 présente en section transversale la forme d'un U dont le voile transversal est courbe afin qu'il puisse entourer le premier élément 2, le diamètre intérieur du collier 1 étant à peu près égal à celui extérieur de l'élément 2. Les deux parois internes 10, 11 des ailes du collier 1 sont chacunes creusées d'une rainure longitudinale 12, respectivement 13 situées en vis-à-vis et qui déterminent une glissière. La facette supérieure 12a, 13a de chaque rainure est prévue oblique de manière à se trouver en contre-dépouille. Le centre du voile du collier 1 est pourvu d'un trou taraudé 14 dans lequel est engagée une vis pression 6.

De manière avantageuse, le collier 1 est réalisé par tronçonnage d'un profilé de métal léger ou de matière plastique réalisé par extrusion, chaque tronçon présentant une longueur légèrement supérieure à l'écartement de ses ailes.

Le composant intermédiaire 3 comprend une semelle 31 de forme généralement plate et dont les deux arêtes latérales forment une lèvre longitudinale 32, 33 dont la face 32a, 33a tournée vers le haut présente la même inclinaison que les facettes 12a, 13a des rainures 12, 13 du collier 1. Ainsi, on peut engager la semelle 31 dans la glissière formée par lesdites rainures, de manière qu'elle se trouve au-dessus de l'élément 2 lorsque celui-ci est engagé dans le collier 1. On comprend aisément que dans ces conditions, il soit nécessaire que les rainures 12 et 13 se trouvent à proximité du bord des ailes dudit collier 1. En vissant la vis pression 6 dans le trou taraudé 14 du collier 1, on provoque le pincement du tube entre la semelle 31 du composant 3 et ladite vis, de manière à immobiliser le composant 3, le collier 1 et l'élément 2.

Au centre de la semelle 31 se dresse un pion ou pied cylindrique 34 de hauteur faible et sur l'extrémité duquel est prévu un organe d'assemblage 35 se présentant, dans l'exemple de fig. 1, sous la forme d'un disque à périphérie pourvu de crans 35a.

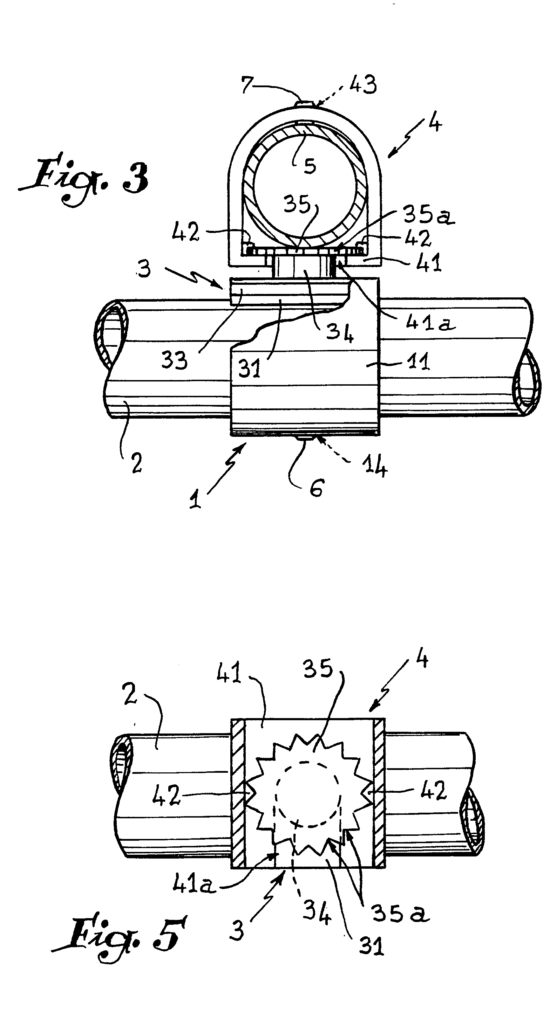

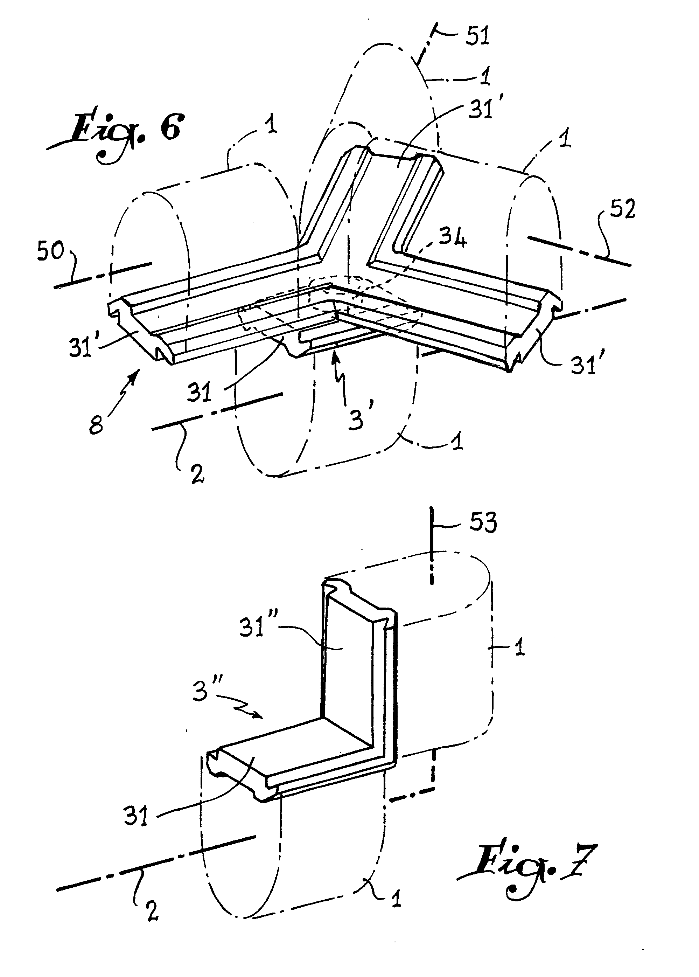

Le deuxième collier 4 présente une forme semblable à celui 1, mais les arêtes libres de ses deux ailes sont réunies par une embase 41 dans laquelle il est ménagé une encoche 41a dont la largeur est très légèrement supérieure au diamètre du pied 34, de telle manière qu'on puisse engager ce dernier dans le collier et l'amener jusqu'au centre de celui-ci. Dans cette position, si la semelle 31 plaque contre la face externe de l'embase 2, le disque 35 se trouve au-dessus de la face supérieure de ladite embase de manière à ne pas entrer en contact avec deux dents 42 disposées l'une en face de l'autre à la base de chaque aile du collier et sur la face supérieure considérée de l'embase 41 (fig. 4). Si le composant intermédiaire 3 est descendu vers le bas (fig. 3), les dents 42 pénètrent dans deux crans 35a diamétralement opposés du disque 35, de telle sorte qu'on peut orienter ainsi ledit composant dans toutes les directions désirées (fig. 5). Le collier 4 comporte encore un trou taraudé 43 disposé dans le centre de son voile transversal et dans lequel une vis 7 peut être engagée.

On comprend aisément comment s'effectue le montage. Après que l'élément 2, le collier 1 et le composant intermédiaire 3 aient été assemblés comme indiqué plus haut, et que le composant intermédiaire 3 ait été orienté par rapport au collier 4, il suffit d'engager le tube 5 dans ce dernier et de visser la vis pression 7 pour solidariser l'ensemble.

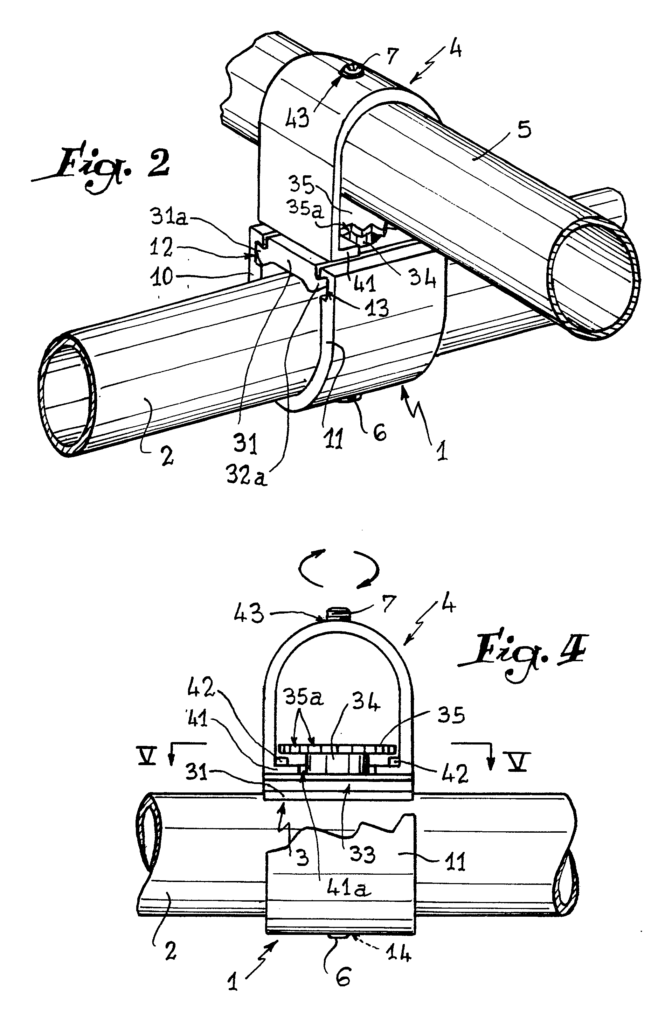

On obtient ainsi le montage illustré en fig. 2, l'élément 5 étant appuyé par la vis pression 7 contre le disque 35 de manière à verrouiller celui-ci contre la semelle 31, de telle sorte qu'ainsi les éléments 2 et 5 soient assemblés de manière rigide. Cette position de verrouillage de l'élément 5 par rapport au collier 4 est particulièrement bien illustrée en fig. 3 et 5.

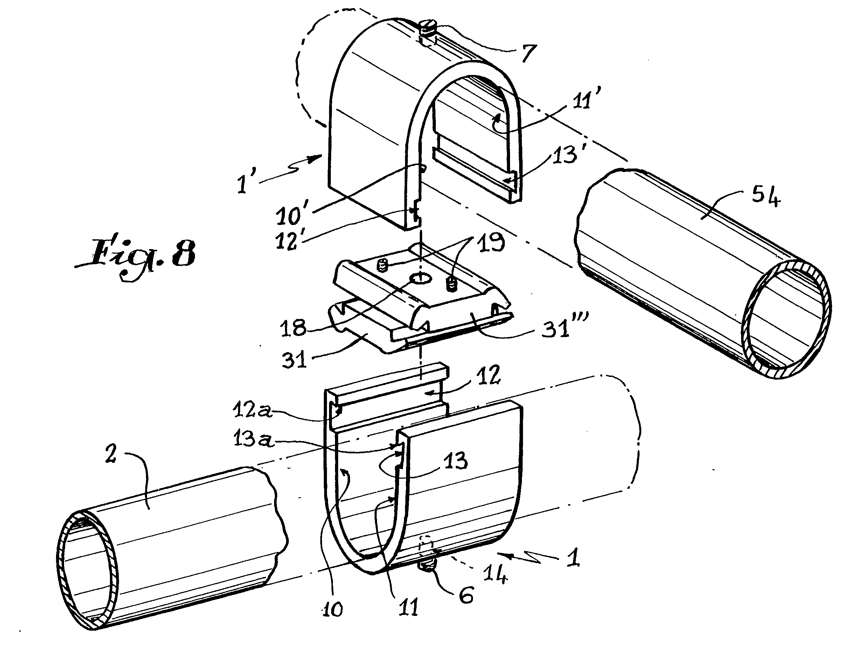

Bien entendu, l'organe d'assemblage 34-35 peut affecter toute forme désirée en vue de l'assemblage de l'élément 2 avec d'autres éléments tels que plusieurs éléments tubulaires 50, 51, 52. On a illustré en fig. 6 un composant intermédiaire 3' composé de la semelle 31 du composant 3 surmontée du pied 34 à l'extrémité libre duquel est placé le centre d'une étoile 8 dont chacune des branches 31' affecte une forme semblable à celle de la semelle 31. Ainsi, cette dernière coopère avec un collier 1 à la manière indiquée plus haut et les branches de l'étoile 8 sont associées de la même façon avec trois colliers 1, de telle sorte que le premier élément 2 illustré en traits d'axe peut être assemblé à trois éléments tubulaires 50, 51, 52 déterminant entre eux un angle de 120° ou autre.

En fig. 7, le composant intermédiaire 3" comporte une semelle 31 à l'extrémité de laquelle est placée une seconde semelle 31" identique à la première et orientée perpendiculairement à elle, de manière qu'on puisse assembler entre eux deux éléments tubulaires 2-53 illustrés par des traits d'axe et orientés perpendiculairement l'un à l'autre dans un même plan.

On a représenté en fig. 8 une variante de réalisation dans laquelle les moyens permettent au composant intermédiaire 3 de coopérer avec le deuxième collier 4 de fig. 1 de manière plus simple et plus économique. A cet effet, le deuxième collier 4 affecté de la référence 1' est semblable à celui 1, c'est-à-dire que les deux parois internes 10', 11' de ses deux ailes comportent des rainures longitudinales 12', 13'. Le moyen d'assemblage du composant intermédiaire 3 et du collier 1' est réalisé au moyen d'une semelle 31''' semblable à celle 31. Les deux semelles 31 et 31''' sont reliées par un axe 18 solidaire de l'une d'elles et par rapport auquel la seconde 31''' peut se déplacer angulairement.

La semelle 31''' est à cet effet pourvue de deux vis pressions 19 agissant sur la semelle 31 pour déterminer la position angulaire désirée des deux semelles. On peut ainsi fixer à tout angle désiré l'orientation des éléments 2 et 54.

En particulier, il va de soi que le composant intermédiaire peut comporter un organe d'assemblage quelconque sans sortir du domaine de l'invention ; par exemple, il peut être réalisé sous la forme d'une pince pour un panneau ou tout autre disposition.

## Revendications

1. Dispositif d'assemblage d'éléments, notamment de profilés tubulaires, comprenant un premier collier coopérant avec un premier élément, un second collier enserrant un second élément et un composant intermédiaire unissant les deux colliers, caractérisé en ce que les parois internes (10, 11) du premier collier qui affecte à la manière connue la forme d'un U, sont chacune creusées d'une rainure longitudinale (12, 13) à contre dépouille 12a, 13a dans laquelle s'engage une semelle (31) du composant intermédiaire (3) tandis que des moyens sont associés audit composant (3) pour coopérer avec le second collier (4) affectant la forme d'un U.

2. Dispositif suivant la revendication 1, caractérisé en ce que les moyens associés au composant (3) pour coopérer avec le second collier (4) sont constitués par un pied (34) se dressant verticalement à partir de la semelle (31) et qui porte un disque (35) à périphérie munie de crans (35a), ledit pied (34) pénétrant dans une encoche (41a) ménagée dans la base (41) dudit collier (4) tandis que deux crans (35a) du disque (35) coopèrent avec deux dents opposées (42) de ladite base (41) du collier (4).

3. Dispositif suivant la revendication 1, caractérisé en ce que l'organe d'assemblage (35) du composant intermédiaire (3) est une étoile (8) au centre de laquelle est associée l'une des extrémités d'un pied (34') dont l'extrémité opposée est solidaire de la semelle (31).

4. Dispositif suivant la revendication 3, caractérisé en ce que chacune des branches de l'étoile (8) affecte la même forme que celle de sa semelle (31) afin de pouvoir coopérer avec un collier (1).

5. Dispositif suivant la revendication 1, caractérisé en ce que l'organe d'assemblage (35) du composant intermédiaire (3) est réalisé sous la forme d'une semelle (31″) orientée perperdiculairement à la semelle (31).

6. Dispositif suivant la revendication 1, caractérisé en ce que les moyens associés au composant (3) pour coopérer avec le second collier (4) sont constitués par une second semelle (31‴) identique à la première (31) et coopérant avec deux rainures (12′, 13′) ménagées dans les parois internes (10′, 11′) des ailes du second collier (1′) prévu semblable au premier (1), les semelles (31, 31‴) étant reliées par un axe (18) assurant leur déplacement angulaire qui est fixé par deux vis pression (19).

Fig. 1

*Fig. 2*

*Fig. 4*

Fig. 3

Fig. 5

*Fig. 6*

*Fig. 7*

*Fig. 8*

EP 0 323 372 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | DE-C- 633 641 (MEIER & WEICHELT EISEN) * Page 2, lignes 30-47; figures * --- | 1,6 | F 16 B 7/04 A 63 H 33/10 E 04 B 1/58 // F 16 C 11/10 |
| D,X | EP-A-0 092 668 (KÜTTENBAUM) * Page 6, ligne 18 - page 7, ligne 30; figures 3,4a,4b * | 1,5 | |
| A | | 3,4,6 | |
| A | FR-A-1 261 347 (NICHANIAN) * Page 1, colonne de droite, alinéa 1 - page 2, colonne de gauche, alinéa 3; figures 1-3 * --- | 2 | |
| A | CH-A- 84 736 (M. PELET) * Page 1, colonne de droite, alinéas 5,6; page 2, colonne de gauche, alinéas 1-3; figures 7,8 * ----- | 2 | |

DOMAINES TECHNIQUES RECHERCHES (Int. Cl.4)

F 16 B
A 06 H
F 16 C
F 16 L
E 04 B

Le présent rapport a été établi pour toutes les revendications

| Lieu de la recherche | Date d'achèvement de la recherche | Examinateur |
|---|---|---|
| LA HAYE | 22-03-1989 | ARESO Y SALINAS J. |